(19) Europäisches Patentamt
European Patent Office
Office européen des brevets

(11) EP 0 496 751 B1

(12) **EUROPÄISCHE PATENTSCHRIFT**

(45) Veröffentlichungstag und Bekanntmachung des Hinweises auf die Patenterteilung:
**10.06.1998 Patentblatt 1998/24**

(21) Anmeldenummer: **90914908.0**

(22) Anmeldetag: **12.10.1990**

(51) Int. Cl.$^6$: **A01N 35/06**, A01N 41/10

(86) Internationale Anmeldenummer:
**PCT/EP90/01720**

(87) Internationale Veröffentlichungsnummer:
**WO 91/05469 (02.05.1991 Gazette 1991/10)**

(54) **HERBIZIDE WIRKSTOFFKOMBINATIONEN**

HERBICIDAL COMBINATIONS OF ACTIVE SUBSTANCES

COMBINAISONS HERBICIDES DE SUBSTANCES ACTIVES

(84) Benannte Vertragsstaaten:
**DE GB IT**

(30) Priorität: **18.10.1989 DE 3934706**
**25.11.1989 DE 3939094**

(43) Veröffentlichungstag der Anmeldung:
**05.08.1992 Patentblatt 1992/32**

(73) Patentinhaber:
**Hoechst Schering AgrEvo GmbH**
**13342 Berlin (DE)**

(72) Erfinder:
- **ORT, Oswald**
  **D-6233 Kelkheim (DE)**
- **WILLMS, Lothar**
  **D-5416 Hillscheid (DE)**
- **ZEISS, Hans-Joachim**
  **D-6231 Sulzbach (DE)**
- **BAUER, Klaus**
  **D-6450 Hanau (DE)**
- **BIERINGER, Hermann**
  **D-6239 Eppstein (DE)**

(56) Entgegenhaltungen:

| | |
|---|---|
| **EP-A- 0 060 429** | **EP-A- 0 090 262** |
| **EP-A- 0 135 191** | **EP-A- 0 137 963** |
| **EP-A- 0 186 118** | **EP-A- 0 186 119** |
| **EP-A- 0 186 120** | **EP-A- 0 230 596** |
| **EP-A- 0 319 075** | **WO-A-83/00329** |

- **Chemical Abstracts, Band 111, Nr. 25, 18. Dezember 1989, (Columbus, Ohio, US), M. Fujiyama et al.: "Herbicidal properties and selectivity of new herbicide, dithiopyr", siehe Seite 261**
- **Chemical Abstracts, Band 107, Nr. 13, 28. September 1987, (Columbus, Ohio, US), K. Ikeda: "Herbicidal properties of a pyrazole herbicide Benzofenap (MY-71)", siehe Seite 222**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.3/3.4

## Beschreibung

Die Erfindung liegt auf dem Gebiet der Pflanzenschutzmittel, die gegen monokotyle und dikotyle Unkräuter eingesetzt werden können.

Aus EP-A 01 37 963, EP-A 01 86 118, EP-A 02 74 634, EP-A 02 98 680 und US-A 4,780,127 sind 2-Benzoylcyclohexandion-derivate bekannt, mit denen ein breites Spektrum mono- und dikotyler Unkräuter bekämpft werden kann. Sie können sowohl als Bodenherbizid als auch über Sproß bzw. Blatt eingesetzt werden und zeigen besonders auch hohe Selektivität in monokotylen Kulturpflanzen wie Getreide, Mais und Reis.

EP-A-230 596 beschreibt synergistisch wirksame Herbizidzusammensetzungen bestehend aus 2-(2-Chlor-4-methyl sulfonyl-benzoyl)-1,3-Cyclohexandion und zumindest einer der folgenden herbizidwirksamen Verbindungen: 2-Chlor-4-(ethyl amino)-6-(isopropylamino)-5-Triazin; 3-Amino-2,5-dichlorbenzolsäure; 2-Chlor-N-isopropyl-acetanilid.

Sowohl im Getreide als auch im Mais und Reis existieren jedoch eine Reihe wirtschaftlich sehr wichtiger monokotyler Unkräuter wie z. B. Alopecurus myosuroides, Avena fatua, Echinochloa crus galli oder Setaria viridis, die mit den erwähnten Verbindungen alleine nicht in optimaler Weise zu bekämpfen sind.

Überraschenderweise wurden nun in biologischen Versuchen einige herbizide Wirkstoffe gefunden, die bei gemeinsamer Anwendung mit den obengenannten Verbindungen ausgesprochen synergistische Wirkungen hinsichtlich der Effektivität gegen Unkräuter haben.

Gegenstand der vorliegenden Erfindung sind herbizide Mittel, gekennzeichnet durch einen synergistisch wirksamen Gehalt an einer oder mehreren Verbindungen der allgemeinen Formel (I) oder deren Salzen (Typ A-Verbindungen)

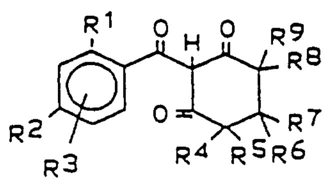

(I)

worin

| | |
|---|---|
| $R^1$ | Halogen, $(C_1$-$C_4)$-Alkoxy, $(C_1$-$C_4)$-Alkyl, $(C_1$-$C_4)$-Haloalkyl, $-NO_2$, -CN oder $S(O)_nR^{10}$; |
| $R^2$ und $R^3$ | unabhängig voneinander Wasserstoff, Halogen, $(C_1$-$C_4)$-Alkyl, $(C_1$-$C_4)$-Alkoxy, $(C_1$-$C_4)$-Haloalkoxy, $(C_1$-$C_4)$-Haloalkyl, -CN, $-NO_2$, $-S(O)_m$-$R^{11}$, $-NR^{12}R^{13}$, $-NR^{14}$-CO-$R^{15}$ |
| $R^4$, $R^6$, $R^7$, $R^8$, $R^9$ | unabhängig voneinander Wasserstoff oder $(C_1$-$C_4)$-Alkyl oder -CO-$R^{16}$; |
| $R^5$ | Wasserstoff, $(C_1$-$C_4)$-Alkyl oder -CO-O-$(C_1$-$C_4)$-Alkyl; |
| $R^{10}$ | $(C_1$-$C_4)$-Alkyl, $(C_1$-$C_4)$-Haloalkyl oder $(C_1$-$C_4)$-Alkoxy; |
| $R^{11}$ | $(C_1$-$C_4)$-Alkyl, $(C_1$-$C_4)$-Haloalkyl, Phenyl, Benzyl, oder $-NR^{17}R^{18}$; |
| $R^{12}$ und $R^{13}$ | unabhängig voneinander Wasserstoff oder $(C_1$-$C_4)$-Alkyl; |
| $R^{14}$ | Wasserstoff oder $(C_1$-$C_4)$-Alkyl; |
| $R^{15}$ | $(C_1$-$C_4)$-Alkyl; |
| $R^{16}$ | Wasserstoff, $(C_1$-$C_4)$-Alkyl, $(C_1$-$C_4)$-Haloalkyl oder $(C_1$-$C_4)$-Alkoxy; |
| $R^{17}$ und $R^{18}$ | unabhängig voneinander Wasserstoff oder $(C_1$-$C_4)$-Alkyl und |
| n und m | unabhängig voneinander 0, 1 oder 2 bedeuten, |

in Kombination mit der folgenden Verbindung VI (Typ B-Verbindung):
N,N-Diethyl-carbaminsäure-4-chlorbenzylthioester (VI),

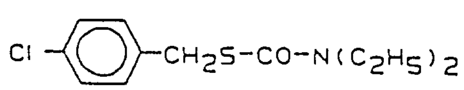

(VI)

wobei die herbiziden Mittel die Wirkstoffe des Typs A undB im Gewichtsverhältnis 1 : 0,5 bis 1 : 200 enthalten.

Die herbiziden Mittel, die sich durch einen synergistisch wirksamen Gehalt an Kombinationen von Typ -A und Tpy -B-verbindungen auszeichnen, können weiterhin einen Gehalt einer oder mehrerer der folgenden Verbindungen aufweisen:

D-2-[4-(6-Chlorbenzoxazol-2-yloxy)phenoxy]-propionsäureethylester (II),

D,L-2-[4-(6-Chlorbenzoxazol-2-yloxy)phenoxy]-propionsäureethylester (III),

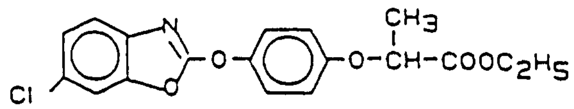

(III)

3,7-Dichlorchinolin-8-carbonsäure (IV) und deren Salze,

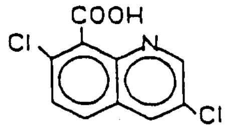

(IV)

N-(Ethylthio-carbonyl)-azepan (V),

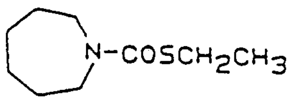

(V)

N-(Butoxymethyl)-2-chlor-N-(2,6-diethylphenyl)-acetamid (VII),

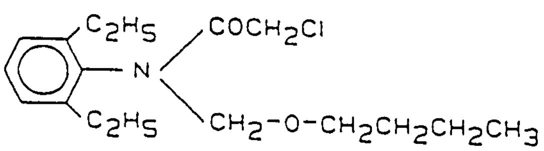

(VII)

N-(2-Propoxyethyl)-2-chlor-N-(2,6-diethylphenyl)-acetamid (VIII),

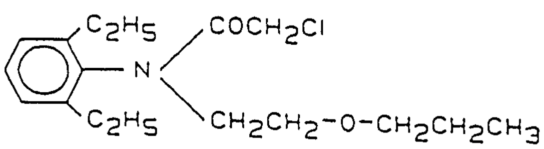

(VIII)

3,5-Bis(methylthio-carbonyl)-2-difluomethyl-4-(2-methylpropyl)-6-trifluormethyl-pyridin (IX),

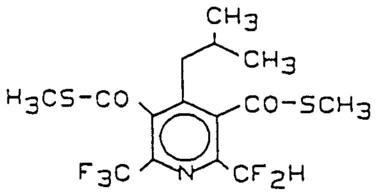

(IX)

2-(1,3-Benzthiazol-2-yloxy)-N-methyl-acetanilid (X),

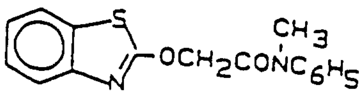

(X)

S-Benzyl-N-ethyl-(1,2-dimethyl-propyl)-thiocarbamat (XI),

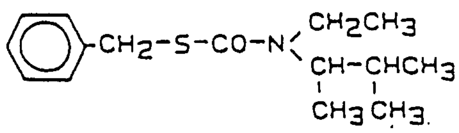

(XI)

N-(2-Phenyl-prop-2-ylthiocarbonyl)-piperidin (XII)

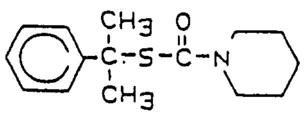

(XII).

HW-52, d.h. 4-Ethoxymethoxy-N-(2,3-dichlorphenyl)-benzamid (XIII),

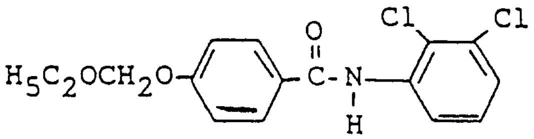

(XIII)

Cinmethylin, chemische Bezeichnung
exo-1-Methyl-4-(1-methylethyl)-2-(2-methylphenylmethoxy)-7-oxabicyclo-[2.2.1]-heptan (XIV),

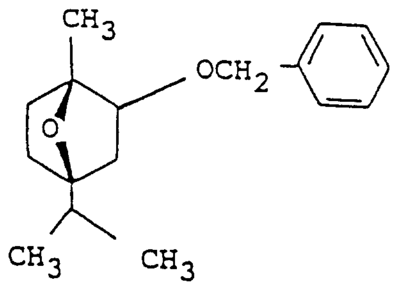

(XIV)

Anilofos; S-[2-[(4-Chlor-phenyl)(1-methylethyl)amino] -2-oxoethyl]0,0-dimethyl phosphordithioat (XV)

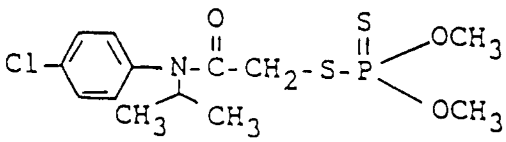

(XV)

Benfuresate, 2,3-Dihydro-3,3-dimethyl-5-benzofuranylethansulfonat (XVI)

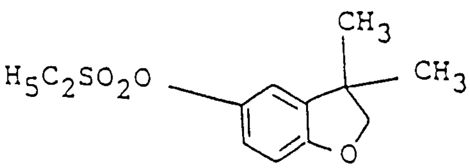

(XVI)

KNW-242, Triazofenamide, 1-(3-Methylphenyl)-5-phenyl-1H-1,2,4-triazol-3-carboxamid (XVII)

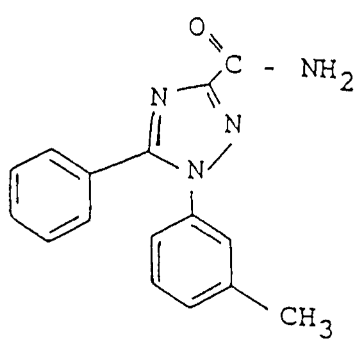

(XVII)

Benzofenap, 2-[4-(2,4-Dichlor-m-toluoyl)-1,3-dimethylpyrazol-5-yloxy]-4-methylacetophenon (XVIII)

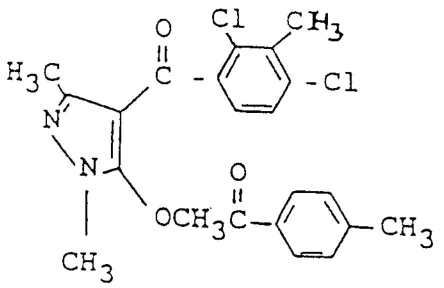

(XVIII)

Pyrazoxyfen, 2-[4-(2,4-Dichlor-benzoyl)-1,3-dimethylpyrazol-5-yloxy]-acetophenon (XIX)

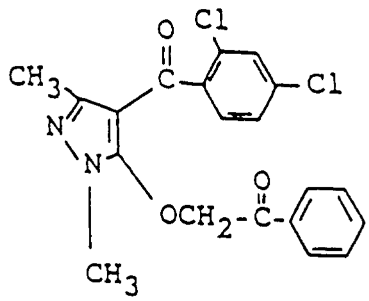

(XIX)

TFH-450, 3-(2,6-Diethylphenylsulfonyl)-1-(N-ethyl-N-methylaminocarbonyl)-1,2,4-triazol (XX)

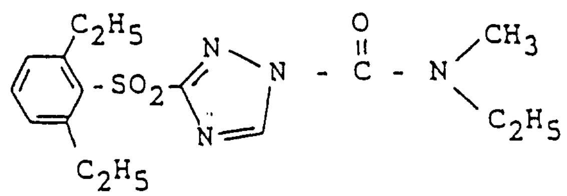

(XX)

Die Verbindungen der Formel (I) sind aus den anfangs genannten Veröffentlichungen bekannt.

Die Verbindung (IV) ist aus British Crop Protection Conference-Weeds, 1985, S. 77-83 als BAS 514 H (Quinchlorac) bekannt. Die Verbindungen (II) bzw. (III), (V)-(VIII), (XV) und (XVI) sind allesamt in "The Pesticide Manual", British Crop Protection Council, 8th Ed., 1987 beschrieben; siehe (III) ("Fenoxaprop-ethyl") S. 379; (V) ("Molinate") S. 578; (VI) ("Thiobencarb") S. 796; (VII) ("Butachlor") S. 106; (VIII) ("Pretilachlor") S. 689; (X) ("Mefenacet") S. 526; (XV) ("Anilofos") S. 30; (XVI) ("Benfuresate") S. 857. Verbindung (IX) ist als "MON 7200" bekannt und in "Proceedings of the 11th Asian-Pacific Weed Science Society Conference 1987, Seite 455-460" beschrieben. Verbindungen (XI) und (XII) sind in "Short Review of Herbicides 1986" 5th edition 1985, Hodogaya Chemical Co. Ltd., Japan, Seiten 110 bzw. 108 unter den Bezeichnungen SC-2957 (Esprocarb) bzw. MY-93, Kayamate, beschrieben. MY-93 wird auch als Dimepiperate oder Yukamate bezeichnet (s. in "Agricultural Chemicals" Thomson Publications 1989-90, USA S. 252).

Verbindung (XIII) (HW-52) ist aus Shokubutsu no Kagakin Chosetsu 18 (2), 151-60 (1983); CA 101 (3): 18948d bekannt.

Verbindung (XIV) ("Cinmethylin") ist aus R.G. Jones in "Pest Management in Rice"; B.T. Grayson, M.B.Green, L.G. Copping (Editors); Society of Chemical Industry; Elsevier Science Publish; England 1990; ISBN 1-85166-514-5 bekannt.

Verbindung (XVII) ("Triazofenamide") ist aus Document Iso/TC 81 N 875, British Standards Institution, Juni 1987

bekannt.

Verbindungen (XVIII) ("Benzofap") und (XIX) ("Pyrazoxyfen") sind aus "The Agrochemicals Handbook", 2nd Edition, The Royal Society of Chemistry, Cambridge, England bekannt.

Verbindung (XX) ist aus EP-A 332133 bekannt.

Von besonderem Interesse sind erfindungsgemäße herbizide Mittel mit Verbindungen der genannten Formel (I) oder deren Salzen, worin

| | |
|---|---|
| $R^1$ | Fluor, Chlor, Brom, Jod, Methoxy, Nitro, Cyano oder $-S(O)_nR^{10}$, |
| $R^2$ und $R^3$ | unabhängig voneinander Wasserstoff, Fluor, Chlor, Brom, Jod, Methyl, Methoxy, Trifluormethoxy, Cyano, Nitro, Trifluormethyl, $-SO_2R^{11}$, $-NR^{12}R^{13}$, $-N(CH_3)-CO-R^{14}$ oder $-CO-O-(C_1-C_4)$-Alkyl und |
| $R^4$, $R^5$, $R^6$, $R^7$, $R^8$ und $R^9$ | unabhängig voneinander Wasserstoff oder Methyl bedeuten sowie |
| $R^{10}$, $R^{11}$, $R^{12}$, $R^{13}$, $R^{14}$ und n | wie oben definiert sind. |

Besonders bevorzugt sind erfindungsgemäße herbizide Mittel mit Verbindungen der Formel (I), in denen

| | |
|---|---|
| $R^2$ und $R^3$ | unabhängig voneinander Wasserstoff, Fluor, Chlor, Brom, $-N(CH_3)_2$, Methoxy, Nitro, $-SO_2CH_3$, $-SO_2CH_2Cl$, $-SO_2N(CH_3)_2$ oder Trifluormethyl und |
| n | 2 bedeuten sowie |
| $R^1$, $R^4$, $R^5$, $R^6$, $R^7$, $R^8$ und $R^9$ | wie oben definiert sind. |

Die Verbindungen der Formel (I) können in verschiedenen tautomeren Strukturen (Keto-Enol-Tautomerie) vorliegen und verfügen über ein sehr acides Wasserstoffatom an der Methingruppe zwischen den drei Carbonylgruppen, das durch ein für die Landwirtschaft geeignetes Kation ersetzt werden kann. Die dann vorliegenden Salze sind im allgemeinen Metall-, insbesondere Alkali-, Erdalkali-, gegebenenfalls substituierte oder unsubstituierte Ammonium- Sulfonium- oder Phosphoniumsalze, in denen die Substituenten aliphatische oder aromatische Reste sein können. Geeignete Basen zur Herstellung der erfindungsgemäßen Salze sind beispielsweise Alkalicarbonate, wie Kaliumcarbonat, Alkali- und Erdalkalihydroxide, Ammoniak oder Ethanolamin.

Unter Alkylresten werden Reste mit der angegebenen Anzahl Kohlenstoffatomen verstanden. Die Reste können geradkettig oder verzweigt sein. Die gebräuchlichsten Reste sind beispielsweise Methyl, Ethyl, n-Propyl, Isopropyl, n-Butyl, Isobutyl, sek.-Butyl oder tert.-Butyl. Unter Halogen wird Fluor, Chlor, Brom oder Jod verstanden. Haloalkyl-Reste können ein- oder mehrfach mit Halogen substituiert sein, d.h. auch perhalogeniert sein.

Besonders geeignete Verbindungen der Formel (I) in den erfindungsgemäßen herbiziden Mischungen sind beispielsweise 2-(2-Chlor-4-methylsulfonylbenzoyl)-1,3-cyclohexandion (Ia), 2-(2-Nitrobenzoyl)-4,4-dimethyl-1,3-cyclohexandion (Ib) und 2-(2-(Nitrobenzoyl)-5,5-dimethyl-1,3-cyclohexandion (Ic). Die 2-Benzoylcyclohexandion-Derivate der Formel (I) sind bekannt, siehe z.B. die genannten EP-A-Veröffentlichungen Nr. 0 137 963, 0 186 118, 0 274 634 und 0 298 680 und U.S. Patent 4 780 127, oder können nach den dort angegebenen Methoden hergestellt werden.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöckchen oder anderen Dauerorganen austreiben, werden durch die Wirkstoffkombinationen gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen Mittel kontrolliert werden können, ohne daß durch die Nennung eine Beschränkung auf bestimmte Arten erfolgen soll.

Auf der Seite der monokotylen Unkrautarten werden z. B. Echinochloa-Arten sowie Cyperusarten aus der annuellen Gruppe und auf seiten der perennierenden Spezies ausdauernde Cyperusarten und Scirpus-Arten gut erfaßt.

Bei dikotylen Unkrautarten erstreckt sich das Wirkungsspektrum auf Galium, Viola, Veronica, Lamium, Stellaria, Amaranthus, Sinapis, Ipomoea, Matricaria, Abutilon, Sida etc. auf der annuellen Seite sowie Convolvulus, Cirsium, Rumex, Artemisia etc. bei den perennierenden Unkräutern.

Unter den spezifischen Kulturbedingungen im Reis vorkommenden Unkräuter wie z. B. Sagittaria, Alisma, Eleocharis, Scirpus, Cyperus etc. werden von den erfindungsgemäßen Wirkstoffkombinationen ebenfalls hervorragend bekämpft.

Unter den spezifischen Kulturbedingungen im Mais und Reis werden wirtschaftlich wichtige monokotyle Unkräuter, wie z. B. Alopecurus myosuroides, Avena fatua, Echinochloa crus galli und Setaria viridis bekämpft.

Werden die erfindungsgemäßen herbiziden Mittel vor dem Keimen auf die Erdoberfläche appliziert, so wird entweder das Auflaufen der Unkrautkeimlinge vollständig verhindert, oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffkombinationen auf die grünen Pflanzenteile im Nachauflaufverfahren tritt ebenfalls sehr rasch nach der Behandlung ein drastischer Wachstumsstop ein, und die Unkrautpflanzen bleiben in dem zum Applikationszeitpunkt vorhandenen Wuchsstadium stehen oder sterben nach einer gewissen Zeit mehr oder weniger schnell ab, so daß auf diese Weise eine für die Kulturpflanzen schädliche Unkrautkonkurrenz sehr früh und nachhaltig durch den Einsatz der neuen erfindungsgemäßen Mittel beseitigt werden kann.

Obgleich die erfindungsgemäßen Mittel eine ausgezeichnete herbizide Aktivität gegenüber mono- und dikotylen Unkräutern aufweisen, werden Kulturpflanzen wirtschaftlich bedeutender Kulturen wie z.B. Weizen, Gerste, Roggen, Reis und Mais nur unwesentlich oder gar nicht geschädigt. Die Mittel eignen sich aus diesen Gründen sehr gut zur selektiven Bekämpfung von unerwünschtem Pflanzenwuchs in landwirtschaftlichen Nutzpflanzungen.

Mit den erfindungsgemäßen Wirkstoffkombinationen wird z. B. eine herbizide Wirkung erreicht, die über das hinausgeht, was als additive Wirkung der Einzelkomponenten zu erwarten gewesen ist. Solche Wirkungssteigerungen erlauben es, die Einsatzmengen der einzelnen Wirkstoffe erheblich zu reduzieren. Es wurden auch Wirkungsvorteile der Art gefunden, daß entweder die Dauerwirkung der Kombinationen verbessert wird oder eine Beschleunigung der Wirkungsgeschwindigkeit zu beobachten ist. Solche Eigenschaften sind deshalb neue, wirtschaftlich fortschrittliche Erfindungen, die dem Anwender erhebliche Vorteile bei der praktischen Unkrautbekämpfung bieten, indem er Unkräuter billiger oder rascher oder dauerhafter bekämpfen kann und dadurch in einem Kulturpflanzenbestand mehr Ertrag erntet.

Ferner wurde gefunden, daß bei einer Reihe der Wirkstoffkombinationen eine Safener- oder Antidotwirkung ausgeprägt vorhanden ist, d. h. daß phytotoxische Nebenwirkungen der verwendeten Wirkstoffe bei Kulturpflanzen, wie z. B. dem Reis, herabgesetzt oder gänzlich vermieden werden.

Die Mischungsverhältnisse der Verbindungen Typ A zu Typ B können innerhalb weiter Grenzen schwanken und liegen in der Regel zwischen 1 : 0,5 bis 1 : 200. Die Wahl des Mischungsverhältnisses ist z. B. abhängig vom Mischungspartner, Entwicklungsstadium der Unkräuter, Unkrautspektrum und Klimabedingungen.

Vorzugsweise werden Mischungsverhältnisse Typ A : Typ B-Verbindungen von 1 : 1 bis 1 : 100 angewendet. Die Aufwandmengen des Herbizids vom Typ A in den Wirkstoffmischungen liegen bevorzugt zwischen 10 und 500 g/ha, die Aufwandmengen der Verbindung vom Typ B zwischen 0,02 und 4,0 kg/ha.

Die erfindungsgemäßen Wirkstoffkombinationen können sowohl als Mischformulierungen der beiden Komponenten vorliegen, die dann in üblicher Weise mit Wasser verdünnt zur Anwendung gebracht werden, oder als sogenannte Tankmischungen durch gemeinsame Verdünnung der getrennt formulierten Komponenten mit Wasser hergestellt werden.

Die Verbindungen vom Typ A und Typ B oder deren Kombinationen können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP) emulgierbare Konzentrate (EC), wäßrige Lösungen oder Konzentrate , Emulsionen (EW), versprühbare Lösungen, Kapselsuspensionen (CS), Dispersionen auf Öl- oder Wasserbasis, Suspoemulsionen, Suspensionskonzentrate (SC), Stäubemittel (DP), ölmischbare Lösungen (OL), Beizmittel, Granulate (GR) in Form von Mikro-, Sprüh, Aufzugs- und Adsorptionsgranulaten, Granulate zur Streu- und Bodenapolikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnakker-Küchler, "Chemische Technologie", Band 7, C. Hauser Verlag München, 4. Aufl. 1986; van Valkenburg, "Pesticides Formulations", Marcel Dekker N.Y., 2nd Ed. 1972-73; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen, "Intruduction to Clay Colloid Chemistry"; 2nd Ed., J. Wiley & Sons, N.Y., Mars den, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technolgie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole oder - Fettamine, Alkan- oder Alkylbenzolsulfonate und Dispergiermittel, z.B. ligninsulfonsaures Natrium, 2,2'-dinaphthylmethan-6,6'disulfonsaures Natrium, dibutylnaphthalin-sulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffes mit fein verteilten, festen Stoffen, z.B. Talkum, natürlichen Tonen wie Kaolin, Bentonit, Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0.1 bis 99 Gewichtsprozent, insbesondere 2 bis 95 Gew.-%, Wirkstoffe vom Typ A und Typ B. Die Konzentrationen der Wirkstoffe der Typen A und B können in den Formulierungen verschieden sein.

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentration kann die Wirkstoffkonzentration etwa 1 bis 85 Gew.-%, vorzugsweise 5 bis 80 Gew.-% betragen. Staubförmige Formulierungen enthalten etwa 1 bis 25 Gew.-%, meistens 5 bis 20 Gew.-% an Wirkstoff, versprühbare Lösungen etwa 0,2 bis 25 Gew.-%, vorzugsweise 2 bis 20 Gew.-% Wirkstoff. Bei Granulaten wie wasserdispergierbaren Granulaten hängt der Wirkstoffgehalt zum TEil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids u.a. variiert die erforderliche Aufwandmenge der Verbindungen vom Typ A und B:

Folgende Beispiele dienen zur Erläuterung der Erfindung:

A. Formulierungsbeispiele

a) Ein Stäubmittel wird erhalten, indem man 10 Gew.-Teile einer erfindungsgemäßen Wirkstoffkombination und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile Wirkstoffe A + B, 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile Wirkstoffe A + B mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis über 277°C) mischt und in einer Reibkugelmühle auf eine Feinheit von unter 5 Mikron vermahlt.

d) Ein emulgierbares Konzentrat wird erhalten aus 15 Gew.-Teilen Wirkstoff A + B, 75 Gew.-Teilen Cyclohexanon als Lösemittel und 10 Gew.-Teilen oxethyliertes Nonylphenol als Emulgator.

e) Ein in Wasser dispergierbares Granulat wird erhalten indem man

75 Gewichtsteile Wirkstoffe A + B,
10 " ligninsulfonsaures Calcium,
5 " Natriumlaurylsulfat,
3 " Polyvinylalkohol und
7 " Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gewichtsteile Wirkstoffe A + B,
5 " 2,2'-dinaphthylmethan-6,6'-disulfonsaures Natrium,
2 " oleoylmethyltaurinsaures Natrium,
1 Gewichtsteil Polyvinylalkohol,
17 Gewichtsteile Calciumcarbonat und
50 " Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Nach den unter a) bis f) beschriebenen Formulierungen werden beispielsweise die in der folgenden Tabelle 1 enthaltenen Wirkstoffkombinationen formuliert (das angegebene Mengenverhältnis bezieht sich auf das Gewicht):

Tabelle 1

| Wirkstoff Typ A | Wirkstoff Typ B | Verhältnis |
|---|---|---|
| Ia | VI | 1:2 |
| | | 1:10 |
| | | 1:100 |
| Ib | VI | 1:2 |
| | | 1:10 |
| | | 1:100 |
| Ic | VI | 1:2 |
| | | 1:10 |
| | | 1:100 |

**B. Chemische Beispiele**

Beispiel 1:

2-[(2-Chloro-4-methylsulfonyl)benzoyl]-1,3-cyclohexandion

42,5 g 2-Chloro-4-methylsulfonylbenzoesäure wurden mit 5 Tropfen Dimethylformamid und 25,1 ml Thionylchlorid in 160 ml Dioxan gekocht bis die Gasentwicklung nachließ. Das Solvens wurde unter Feuchtigkeitsausschluß evaporiert (am Rotationsverdampfer abgezogen). Zu dem öligen Rückstand gab man 0 °C 19,7 g 1,3-Cyclohexandion in 250 ml Acetonitril und tropfte dann bei dieser Temp. 63,1 ml Triethylamin zu. Man rührte 15 min nach, versetzte mit 15,3 ml Acetoncyanhydrin und ließ über Nacht stehen. Das Reaktionsgemisch wurde unter reduziertem Druck am Rotationsverdampfer eingeengt, der Rückstand in Essigester/Wasser aufgenommen und die org. Phase mit 2N Salzsäure gewaschen. Das Produkt wurde mit 5 %-iger $K_2CO_3$-Lsg. aus der org. Phase extrahiert, und mit konz. Salzsäure bei pH 2-3 unter Kühlung ausgefällt. Man erhielt nach Absaugen und Trocknen 48,4 g 2-[(2-Chloro-4-methylsulfonyl)benzoyl]-1,3-cyclohexandion (Bsp. Nr. 1; Tabelle 2) vom Schmp. 141-142 °C

In analoger Weise wurden die in Tabelle 2 aufgeführten Verbindungen erhalten:

Tabelle 2, Forts.

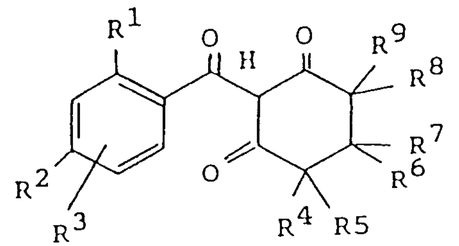

(I)

| Bsp. Nr. | $R^1$ | $R^2$ | $R^3$ | $R^4$ | $R^5$ | $R^6$ | $R^7$ | $R^8$ | $R^9$ | Schmp. [°C] |
|---|---|---|---|---|---|---|---|---|---|---|
| 2 | $-NO_2$ | -Cl | H | H | H | H | H | H | H | 183 |
| 3 | $-NO_2$ | -H | $2-CH_3$ | H | H | $CH_3$ | $CH_3$ | H | H | 112 |
| 4 | -Cl | $-SO_2C_2H_5$ | H | H | H | H | H | H | H | Öl |
| 5 | -Cl | $-SO_2C_2H_5$ | H | H | H | $CH_3$ | $CH_3$ | H | H | Öl |
| 6 | -Cl | $-NO_2$ | H | $CH_3$ | $CH_3$ | H | H | H | H | 90 |
| 7 | $-NO_2$ | -Cl | H | $CH_3$ | $CH_3$ | H | H | H | H | 126 |
| 8 | $-NO_2$ | -Cl | H | H | H | $CH_3$ | $CH_3$ | H | H | 119 |
| 9 | -H | -H | $3-CF_3O$ | H | H | $CH_3$ | $CH_3$ | H | H | Öl |
| 10 | -Cl | -F | H | H | H | $CH_3$ | $CH_3$ | H | H | Öl |
| 11 | -Cl | $-SO_2CH_3$ | H | H | $i-C_3H_7$ | H | H | H | H | Öl |
| 12 | $-NO_2$ | -H | H | $CH_3$ | $CH_3$ | H | H | H | H | Öl |
| 13 | $-NO_2$ | -H | H | H | $CH_3$ | H | H | $CH_3$ | $CH_3$ | Öl |
| 14 | $-NO_2$ | -Cl | H | $CH_3$ | H | H | H | $CH_3$ | $CH_3$ | Öl |
| 15 | -Cl | $-NO_2$ | H | $CH_3$ | $CH_3$ | H | H | $CH_3$ | H | Öl |
| 16 | -Cl | -Cl | H | $i-C_3H_7$ | H | H | H | H | H | Öl |

Tabelle 2, Forts.

| Bsp. Nr. | $R^1$ | $R^2$ | $R^3$ | $R^4$ | $R^5$ | $R^6$ | $R^7$ | $R^8$ | $R^9$ | Schmp. [°C] |
|---|---|---|---|---|---|---|---|---|---|---|
| 17 | -Cl | $-SO_2CH_3$ | H | $CH_3$ | $CH_3$ | H | H | H | H | Öl |
| 18 | -Cl | $-SO_2CH_3$ | H | $CH_3$ | $CH_3$ | H | H | H | $CH_3$ | Öl |
| 19 | $-NO_2$ | -H | H | $CH_3$ | $CH_3$ | $CH_3$ | H | H | H | Öl |
| 20 | $-NO_2$ | -Cl | H | H | H | H | $CH_3$ | $CH_3$ | $CH_3$ | Öl |
| 21 | -Cl | $-NO_2$ | H | $CH_3$ | $CH_3$ | $CH_3$ | H | H | H | ÖL |
| 22 | -Cl | $-SO_2CH_3$ | H | $CH_3$ | $CH_3$ | $CH_3$ | H | H | H | Öl |
| 23 | $-NO_2$ | -H | H | H | H | H | H | H | H | 142 |
| 24 | -H | -H | $3-NO_2$ | H | H | H | H | H | H | 87 |
| 25 | -H | -H | $3-NO_2$ | H | H | $CH_3$ | $CH_3$ | H | H | 82 |
| 26 | -F | -H | 6-F | H | H | H | H | H | H | 86 |
| 27 | -F | -H | 6-F | $CH_3$ | $CH_3$ | H | H | H | H | 95 |
| 28 | -F | -H | 6-F | H | H | $CH_3$ | $CH_3$ | H | H | Öl |
| 29 | $-OCH_2$ | -H | $6-OCH_3$ | H | H | $CH_3$ | $CH_3$ | H | H | 153 |
| 30 | $-NO_2$ | -H | 5-Cl | H | H | H | H | H | H | 165 |
| 31 | $-NO_2$ | -H | 5-Cl | H | H | H | H | $CH_3$ | $CH_3$ | 122 |
| 32 | $-NO_2$ | -H | 5-Cl | H | H | $CH_3$ | $CH_3$ | H | H | 132 |
| 33 | $-NO_2$ | -H | 5-Cl | H | $CH_3$ | H | H | $CH_3$ | $CH_3$ | 119 |
| 34 | -Cl | $-SO_2CH_3$ | H | H | H | $CH_3$ | $CH_3$ | H | H | 138-139 |
| 35 | $-NO_2$ | -H | H | H | H | $CH_3$ | $CH_3$ | H | H | 132-134 |
| 36 | -Cl | -Cl | H | H | H | H | H | H | H | 102-104 |
| 37 | -Cl | -F | H | H | H | H | H | H | $i-C_3H_7$ | Öl |
| 38 | $-NO_2$ | -Cl | H | H | H | H | H | $i-C_3H_7$ | H | 108 |

Tabelle 2, Forts.

| Bsp. Nr. | $R^1$ | $R^2$ | $R^3$ | $R^4$ | $R^5$ | $R^6$ | $R^7$ | $R^8$ | $R^9$ | Schmp. [°C] |
|---|---|---|---|---|---|---|---|---|---|---|
| 39 | $-NO_2$ | -H | H | $i-C_3H_7$ | H | H | H | H | H | 99 |
| 40 | $-NO_2$ | -H | $4-CH_3$ | H | H | H | H | H | H | 96 |
| 41 | $-NO_2$ | $-CF_3$ | H | H | H | H | H | H | H | 112 |
| 42 | -H | -F | H | H | H | H | H | H | H | 192 |
| 43 | -F | -H | H | H | H | H | H | H | H | 215 |

## C. Biologische Beispiele

1. Unkrautwirkung im Vorauflauf

Samen bzw. Rhizomstücke von mono- und dikotylen Unkrautpflanzen werden in Plastiktöpfen in sandiger Lehmerde ausgelegt und mit Erde abgedeckt. Im Reisanbau vorkommende Unkräuter werden im mit Wasser gesättigten Boden kultiviert, wobei so viel Wasser in die Töpfe gefüllt wird, das das Wasser bis zu Bodenoberfläche oder einige Millimeter darüber steht. Die in Form von benetzbaren Pulvern oder Emulsionskonzentraten formulierten erfindungsgemäßen Wirkstoffkombinationen sowie in parallelen Versuchen die entsprechend formulierten Einzelwirkstoffe werden dann als wäßrige Suspensionen bzw. Emulsionen mit einer Wasseraufwandmenge von umgerechnet 600 bis 800 l/ha in unterschiedlichen Dosierungen auf die Oberfläche der Abdeckerde appliziert. Bei der Applikation in Reiskulturen werden die Wirkstoffformulierungen in das Bewässerungswasser gegossen.

Nach der Behandlung werden die Töpfe im Gewächshaus aufgestellt und unter guten Wachstumsbedingungen für die Unkräuter gehalten. Die optische Bonitur der Pflanzen- bzw. der Auflaufschäden erfolgte nach dem Auflaufen der Versuchspflanzen nach einer Versuchszeit von 3 bis 4 Wochen im Vergleich zu unbehandelten Kontrollen. Die erfindungsgemäßen herbiziden Mittel weisen eine gute herbizide Vorauflaufwirksamkeit gegen ein breites Spektrum von Ungräsern und Unkräutern auf.

In allen Fällen wurde bei den Kombinationen unterschieden zwischen dem errechneten und dem gefundenen Wirkungsgrad. Der errechnete, theoretisch zu erwartende Wirkungsgrad einer Kombination wird ermittelt nach der Formel von S. R. Colby: Calculation of synergistic and antagonistic responses of herbicide combinations, Weeds 15 (1967) 20-22.

Diese Formel lautet:

$$E = X + Y - \frac{X \cdot Y}{100}$$

wobei

X = % Schädigung durch Herbizid A bei x kg/ha Aufwandmenge;

Y = % Schädigung durch Herbizid B bei y kg/ha Aufwandmenge;

E = Die zu erwartende Schädigung durch die Herbizide A + B bei x + y kg/ha.

Ist die tatsächliche Schädigung größer als die rechnerisch zu erwartende, so ist die Wirkung der Kombination mehr als additiv, d.h. es liegt ein synergistischer Wirkungserffekt vor.

Die erfindungsgemäßen Wirkstoffkombinationen haben eine herbizide Wirkug, die höher ist als sie aufgrund der beobachteten Wirkungen der Einzelkomponenten bei alleiniger Anwendung nach Colby zu erwarten ist. Die Wirkstoffkombinationen sind somit synergistisch

**2. Unkrautwirkung im Nachauflauf**

Samen bzw. Rhizomstücke von mono- und dikotylen Unkräutern werden in Plastiktöpfen in sandigem Lehmboden ausgelegt, mit Erde abgedeckt und im Gewächshaus unter guten Wachstumsbedingungen angezogen. Im Reisanbau vorkommende Unkräuter werden in Töpfen angezogen, in denen Wasser bis zu 2 cm über der Bodenoberfläche steht, und während der Versuchsphase kultiviert. Drei Wochen nach der Aussaat werden die Versuchspflanzen im Dreiblattstadium behandelt.

Die als Spritzpulver bzw. als Emulsionskonzentrate formulierten erfindungsgemäßen Wirkstoffkombinationen sowie in parallelen Versuchen die entsprechend formulierten Einzelwirkstoffe werden in verschiedenen Dosierungen mit einer Wasseraufwandmenge von umgerechnet 300 bis 600 l/ha auf die grünen Pflanzenteile gesprüht und nach ca. 3 bis 4 Wochen Standzeit der Versuchspflanzen im Gewächshaus unter optimalen Wachstumsbedingungen die Wirkung der Präparate optisch im Vergleich zu unbehandelten Kontrollen bonitiert. Bei Unkräutern, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht. Die erfindungsgemäßen Mittel weisen auch im Nachauflauf eine gute herbizide Wirksamkeit gegen ein breites Spektrum wirtschaftlich wichtiger Ungräser und Unkräuter auf. Die Wirkungen der erfindungsgemäßen Mittel sind nach der Colby-Analyse (vgl. Biolog. Beispiel 1.) synergistisch (siehe Tabelle 4).

Tabelle 4

| Herbizide Wirkung (%) bei Nachauflaufanwendung | | | | | |
|---|---|---|---|---|---|
| Herbizid | Dosis g AS/ha | Reis (verpflanzt) | Reis (gesät) | ECCG | CYMO |
| Ia | 20 | 0 | 0 | 0 | 97 |
| | 5 | 0 | 0 | 0 | 93 |
| | 1,25 | 0 | 0 | 0 | 0 |
| VI | 250 | 0 | 0 | 83 | 0 |
| | 60 | 0 | 0 | 0 | 0 |
| | 15 | 0 | 0 | 0 | 0 |
| Ia+VI | 20+60 | 0 | 0 | 85 (0) | 99 (97) |
| | 5+60 | 0 | 0 | 50 (0) | 95 (93) |
| | 5+15 | 0 | 0 | 25 (0)) | 95 (93) |

Abkürzungen:

VI = Thiobencarb
ECCG = Echinochloa crus galli
CYMO = Cyperus monti ≡ C.serotinus
( ) = errechneter Wert nach Colby
Ia = 2-(2-Chlor-4-methylsulfonyl-benzoyl)-1.3-Cycloheandion

**3. Kulturpflanzenverträglichkeit**

In weiteren Versuchen im Gewächshaus werden Samen einer größeren Anzahl von Kulturpflanzen und Unkräutern in sandigem Lehmboden ausgelegt und mit Erde abgedecket. Reis wird als Wasserreis im wassergesättigten Boden angezogen und kultiviert.

Ein Teil der Töpfe wird sofort wie unter 1. beschrieben behandelt, die übrigen im Gewächshaus aufgestellt, bis die Pflanzen zwei bis drei echte Blätter entwickelt haben und dann mit den erfindungsgemäßen Wirkstoffkombinationen und zum Vergleich nur mit einem Einzelwirkstoff in unterschiedlichen Dosierungen, wie unter 2. beschrieben besprüht. Bei Wasserreis erfolgt die Applikation teilweise auch durch Gießen der Wirkstoffe bzw. deren Formulierung in das Bewässerungswasser.

Vier bis fünf Wochen nach der Applikation und Standzeit im Gewächshaus wird mittels optischer Bonitur festgestellt, daß die erfindungsgemäßen Wirkstoffkombinationen verschiedene Kulturen im Vor- und Nachauflaufverfahren selbst bei hohen Wirkstoffdosierungen ungeschädigt lassen. Sie schonen Gramineen-Kulturen wie z.B. Gerste, Weizen, Roggen, Sorghum-Hirsen und insbesondere Mais und Reis. Die erfindungsgemäßen Wirkstoffkombinationen weisen somit eine hohe Selektivität bei Anwendung zur Bekämpfung von unerwünschten Pflanzenwuchs in landwirtschaftlichen Kulturen auf.

Im Vergleich zu der alleinigen Anwendung der einzelnen Wirkstoffe zeigt sich besonders auch bei erhöhten Dosierungen, daß die Selektivität der Wirkstoffkombinationen im Vergleich zu den Einzelwirkstoffen bei gleicher Aufwandmenge des jeweils wirksamsten der Herbizide besser ist. Die Wirkstoffkombinationen sind somit geeignet, Herbizidschäden an Kulturpflanzen besonders an Reis effektiv reduzieren zu können.

**Patentansprüche**

1. Herbizides Mittel, gekennzeichnet durch einen synergistisch wirksamen Gehalt an einer oder mehreren Verbindungen der allgemeinen Formel (I) oder deren Salzen (Typ A-Verbindungen)

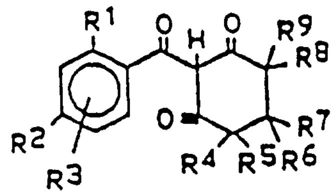

(I)

worin

| | |
|---|---|
| $R^1$ | Halogen, $(C_1-C_4)$-Alkoxy, $(C_1-C_4)$-Alkyl, $(C_1-C_4)$-Haloalkyl, $-NO_2$, -CN oder $S(O)_nR^{10}$; |
| $R^2$ und $R^3$ | unabhängig voneinander Wasserstoff, Halogen, $(C_1-C_4)$-Alkyl, $(C_1-C_4)$-Alkoxy, $(C_1-C_4)$-Haloalkoxy, $(C_1-C_4)$-Haloalkyl, -CN, $-NO_2$, $-S(O)_m-R^{11}$, $-NR^{12}R^{13}$, $-NR^{14}-CO-R^{15}$ oder $-CO-R^{16}$; |
| $R^4$, $R^6$, $R^7$, $R^8$, $R^9$ | unabhängig voneinander Wasserstoff oder $(C_1-C_4)$-Alkyl; |
| $R^5$ | Wasserstoff, $(C_1-C_4)$-Alkyl oder $-CO-O-(C_1-C_4)$-Alkyl; |
| $R^{10}$ | $(C_1-C_4)$-Alkyl, $(C_1-C_4)$-Haloalkyl oder $(C_1-C_4)$-Alkoxy; |
| $R^{11}$ | $(C_1-C_4)$-Alkyl, $(C_1-C_4)$-Haloalkyl, Phenyl, Benzyl, oder $-NR^{17}R^{18}$; |
| $R^{12}$ und $R^{13}$ | unabhängig voneinander Wasserstoff oder $(C_1-C_4)$-Alkyl; |
| $R^{14}$ | Wasserstoff oder $(C_1-C_4)$-Alkyl; |
| $R^{15}$ | $(C_1-C_4)$-Alkyl; |
| $R^{16}$ | Wasserstoff, $(C_1-C_4)$-Alkyl, $(C_1-C_4)$-Haloalkyl oder $(C_1-C_4)$-Alkoxy; |
| $R^{17}$ und $R^{18}$ | unabhängig voneinander Wasserstoff oder $(C_1-C_4)$-Alkyl und |
| n und m | unabhängig voneinander 0, 1 oder 2 bedeuten, |

in Kombination mit der folgenden Verbindung VI (Typ-B-Verbindung)

N,N-Diethyl-carbaminsäure-4-chlorbenzylthioester (VI),

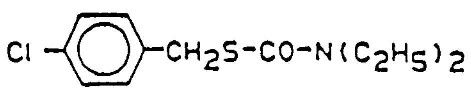

(VI)

wobei die herbiziden Mittel die Wirkstoffe des Typs A und des Typs B im Gewichtsverhältnis 1 : 0,5 bis 1 : 200 enthalten

**2.** Mittel nach Anspruch 1, dadurch gekennzeichnet, daß es Verbindungen der Formel (I) oder deren Salze enthält, worin

| | |
|---|---|
| $R^1$ | Fluor, Chlor, Brom, Jod, Methoxy, Nitro, Cyano oder $-S(O)_nR^{10}$, |
| $R^2$ und $R^3$ | unabhängig voneinander Wasserstoff, Fluor, Chlor, Brom, Jod, Methyl, Methoxy, Trifluormethoxy, Cyano, Nitro, Trifluormethyl, $-SO_2R^{11}$, $-NR^{12}R^{13}$, $-N(CH_3)-CO-R^{14}$ oder $-CO-O-(C_1C_4)$-Alkyl und |
| $R^4$, $R^5$, $R^6$, $R^7$, $R^8$ und $R^9$ | unabhängig voneinander Wasserstoff oder Methyl bedeuten sowie |
| $R^{10}$, $R^{11}$, $R^{12}$, $R^{13}$, $R^{14}$ und n | wie oben definiert sind. |

**3.** Mittel nach Anspruch 1 oder 2, dadurch gekennzeichnet, daß es ein oder mehrere Verbindungen der Formel (I) oder deren Salze enthält, worin

| | |
|---|---|
| $R^2$ und $R^3$ | unabhängig voneinander Wasserstoff, Fluor, Chlor, Brom, $-N(CH_3)_2$, Methoxy, Nitro, $-SO_2CH_3$, $-SO_2CH_2Cl$, $-SO_2N(CH_3)_2$ oder Trifluormethyl und |
| n | 2 bedeuten sowie |
| $R^1$, $R^4$, $R^5$, $R^6$, $R^7$, $R^8$ und $R^9$ | wie oben definiert sind. |

**4.** Mittel nach einem der vorherigen Ansprüche, gekennzeichnet durch einen zusätzlichen Gehalt an einer oder mehrerer Verbindungen II, III, IV, V, VII, VIII, IX, X, XI, XII, XIII, XIV, XV, XVI, XVII, XVIII IXX, XX

D-2-[4-(6-Chlorbenzoxazol-2-yloxy)phenoxy]-propionsäureethylester (II),

D,L-2-[4-(6-Chlorbenzoxazol-2-yloxy)phenoxy]-propionsäureethylester (III),

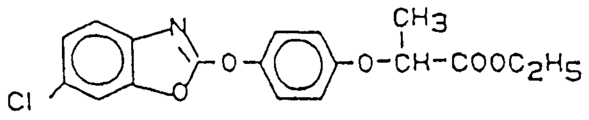

(III).

3,7-Dichlorchinolin-8-carbonsäure (IV) und deren Salze,

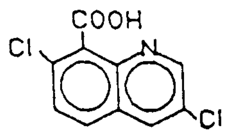

(IV)

N-(Ethylthio-carbonyl)-azepan (V),

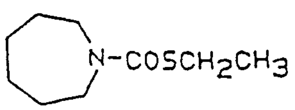

(V)

N-(Butoxymethyl)-2-chlor-N-(2,6-diethylphenyl)-acetamid (VII),

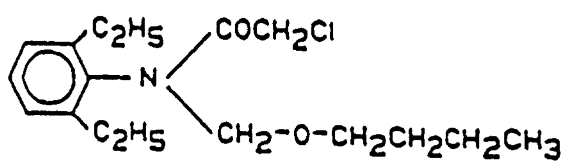

. (VII)

N-(2-Propoxyethyl)-2-chlor-N-(2,6-diethylphenyl)-acetamid (VIII),

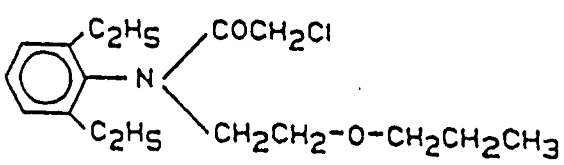

(VIII)

3,5-Bis(methylthio-carbonyl)-2-difluormethyl-4-(2-methylpropyl)-6-trifluormethyl-pyridin (IX),

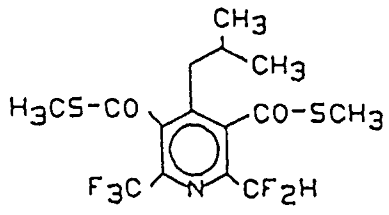

(IX)

2-(1,3-Benzthiazol-2-yloxy)-N-methyl-acetanilid (X),

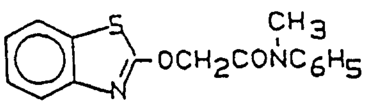

(X)

S-Benzyl-N-ethyl-(1,2-dimethyl-propyl)-thiocarbamat (XI),

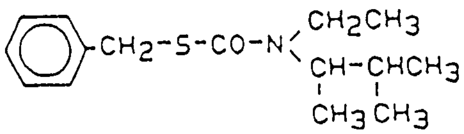

(XI)

und

N-(2-Phenyl-prop-2-ylthiocarbonyl)-piperidin (XII)

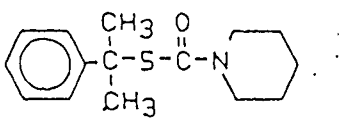

(XII),

HW-52, d.h. 4-Ethoxymethoxy-N-(2,3-dichlorphenyl)-benzamid (XIII),

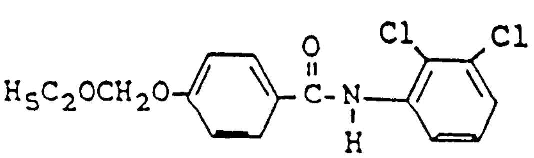

(XIII)

Cinmethylin, chemische Bezeichnung
exo-1-Methyl-4-(1-methylethyl)-2-(2-methylphenylmethoxy)-7-oxabicyclo-[2.2.1]-heptan (XIV),

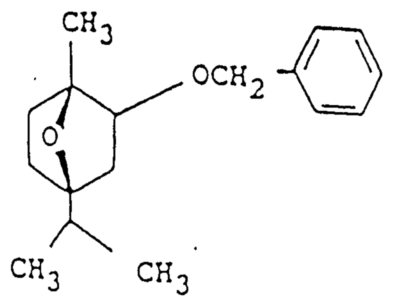

(XIV)

Anilofos; S-[2-[(4-Chlorophenyl)(1-methylethyl)amino]-2-oxoethyl]0,0-dimethyl phosphosdithioat (XV),

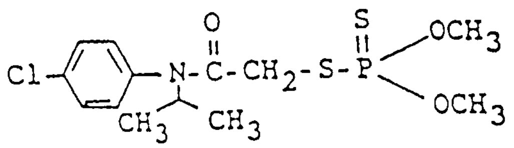

(XV)

Benfuresate, 2,3-Dihydro-3,3-dimethyl-5-benzofuranylethansulfonat (XVI),

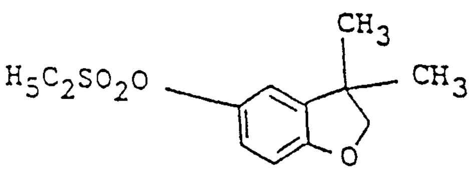

(XVI)

KNW-242, Triazofenamide, 1-(3-Methylphenyl)-5-phenyl-1H-1,2,4-triazol-3-carboxamid (XVII),

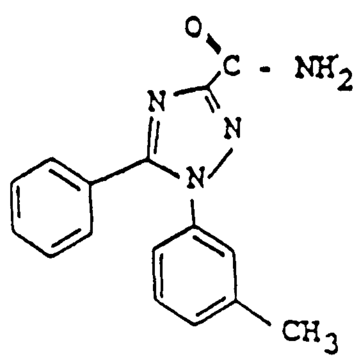

(XVII)

Benzofenap, 2-[4-(2,4-Dichlor-m-toluoyl)-1,3-dimethylpyrazol-5-yloxy]-4-methylacetophenon (XVIII),

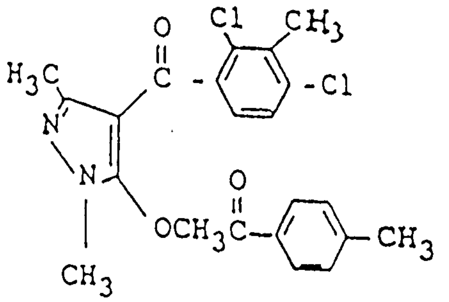

(XVIII)

Pyrazoxyfen, 2-[4-(2,4-Dichlor-benzoyl)-1,3-dimethylpyrazol-5-yloxy]-acetophenon (XIX)

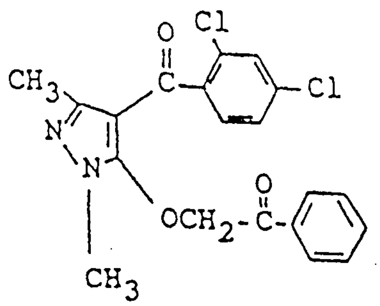

(IX)

TFH-450, 3-(2,6-Diethylphenylsulfonyl)-1-(N-ethyl-N-methylaminocarbonyl)-1,2,4-triazol (XX)

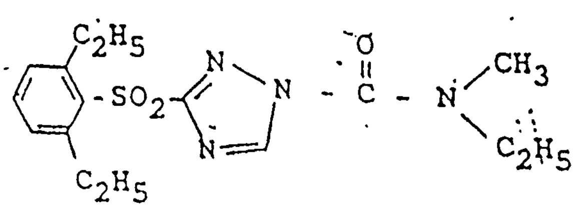

(XX)

5. Mittel nach einem oder mehreren der Ansprüche 1 bis 4, dadurch gekennzeichnet, daß sie 0,1 bis 99 Gew.-% der Wirkstoffe der Typen A und B neben üblichen Formulierungshilfsmitteln enthalten.

6. Verfahren zur Herstellung eines Mittels nach einem oder mehreren der Ansprüche 1 bis 5 dadurch gekennzeichnet, daß man ein oder mehrere Verbindungen A mit der Verbindung B analog einer üblichen Pflanzenschutzmittelformulierung aus der Gruppe, enthaltend Spritzpulver, waserlösliche Pulver emulsierbare Konzentrate, wäßrige Lösungen oder Konzentrate, Emulsionen, versprühbare Lösungen (tank-mix), Kapselsuspensionen, Dispersionen auf Öl- oder Wasserbasis, Suspoemulsionen, Suspensionskonzentrate, Stäubemittel, ölmischbare Lösungen, Beizmittel, Mikro-, Sprüh-, Aufzugs- und Adsorptionsgranulate Boden- und Streugranulate, wasserdispergierbare Granulate, ULV-Formulierungen, Mikrokapseln oder Wachse, formuliert.

7. Verfahren zur Bekämpfung von unerwünschten Pflanzen, dadurch gekennzeichnet, daß man auf diese oder deren Anbauflächen eine wirksame Menge eines Mittels nach einem oder mehreren der Ansprüche 1 bis 5 appliziert.

8. Verfahren nach Anspruch 7, dadurch gekennzeichnet, daß Unkräuter in Nutzpflanzenkulturen selektiv bekämpft

werden.

9. Verfahren nach Anspruch 8, dadurch gekennzeichnet, daß die Nutzpflanzenkultur eine aus der Gruppe Weizen, Gerste, Roggen, Reis und Mais ist.

## Claims

1. A herbicidal composition which contains a synergistically effective amount of one or more compounds of the formula (I) or of salts thereof (type A compounds)

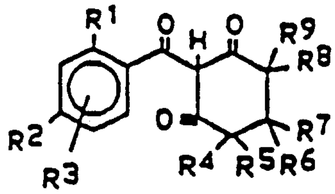

(I)

where

| | |
|---|---|
| $R^1$ | is halogen, $(C_1\text{-}C_4)$alkoxy, $(C_1\text{-}C_4)$alkyl, $(C_1\text{-}C_4)$haloalkyl, $-NO_2$, -CN or $S(O)_nR^{10}$; |
| $R^2$ and $R^3$ | independently of one another are hydrogen, halogen, $(C_1\text{-}C_4)$alkyl, $(C_1\text{-}C_4)$alkoxy, $(C_1\text{-}C_4)$haloalkoxy, $(C_1\text{-}C_4)$haloalkyl, -CN, $-NO_2$, $-S(O)_m\text{-}R^{11}$, $-NR^{12}R^{13}$, $-NR^{14}\text{-CO-}R^{15}$ or $\text{-CO-}R^{16}$; |
| $R^4$, $R^6$, $R^7$, $R^8$ and $R^9$ | independently of one another are hydrogen or $(C_1\text{-}C_4)$alkyl; |
| $R^5$ | is hydrogen, $(C_1\text{-}C_4)$alkyl or $\text{-CO-O-}(C_1\text{-}C_4)$alkyl; |
| $R^{10}$ | is $(C_1\text{-}C_4)$alkyl, $(C_1\text{-}C_4)$haloalkyl or $(C_1\text{-}C_4)$alkoxy; |
| $R^{11}$ | is $(C_1\text{-}C_4)$alkyl, $(C_1\text{-}C_4)$haloalkyl, phenyl, benzyl or $-NR^{17}R^{18}$; |
| $R^{12}$ and $R^{13}$ | independently of one another are hydrogen or $(C_1\text{-}C_4)$alkyl; |
| $R^{14}$ | is hydrogen or $(C_1\text{-}C_4)$alkyl; |
| $R^{15}$ | is $(C_1\text{-}C_4)$alkyl; |
| $R^{16}$ | is hydrogen, $(C_1\text{-}C_4)$alkyl, $(C_1\text{-}C_4)$haloalkyl or $(C_1\text{-}C_4)$alkoxy; |
| $R^{17}$ and $R^{18}$ | independently of one another are hydrogen or $(C_1\text{-}C_4)$alkyl and |
| n and m | independently of one another are 0, 1 or 2, |

in combination with the following compound VI (type B compound)

4-chlorobenzyl N,N-diethylthiocarbamate (VI),

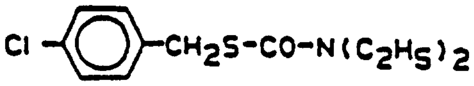

(VI),

the herbicidal composition containing the active substances of type A and of type B in a weight ratio of 1 : 0.5 to 1

: 200.

**2.** A composition as claimed in claim 1, which contains compounds of the formula (I) or salts thereof, where

| | |
|---|---|
| $R^1$ | is fluorine, chlorine, bromine, iodine, methoxy, nitro, cyano or $-S(O)_mR^{10}$, |
| $R^2$ and $R^3$ | independently of one another are hydrogen, fluorine, chlorine, bromine, iodine, methyl, methoxy,trifluoromethoxy, cyano, nitro, trifluoromethyl, $-SO_2R^{11}$, $-NR^{12}R^{13}$, $-N(CH_3)-CO-R^{14}$ or $-CO-O-(C_1-C_4)$alkyl and |
| $R^4$, $R^5$, $R^6$, $R^7$, $R^8$ and $R^9$ | independently of one another are hydrogen or methyl and |
| $R^{10}$, $R^{11}$, $R^{12}$, $R^{13}$, $R^{14}$ and n | are as defined above. |

**3.** A composition as claimed in claim 1 or 2, which contains one or more compounds of the formula (I) or salts thereof, where

| | |
|---|---|
| $R^2$ and $R^3$ | independently of one another are hydrogen, fluorine, chlorine, bromine, $-N(CH_3)_2$, methoxy, nitro, $-SO_2CH_3$, $-SO_2CH_2Cl$, $-SO_2N(CH_3)_2$ or trifluoromethyl and |
| n | is 2, and |
| $R^1$, $R^4$, $R^5$, $R^6$, $R^7$, $R^8$ and $R^9$ | are as defined above. |

**4.** An agent as claimed in one of the preceding claims, which additionally contains one or more compounds II, III, IV, V, VII, VIII, IX, X, XI, XII, XIII, XIV, XV, XVI, XVII, XVIII, XIX, XX

ethyl D-2-[4-(6-chlorobenzoxazol-2-yloxy)phenoxy]propionate (II),

ethyl D,L-2-[4-(6-chlorobenzoxazol-2-yloxy)phenoxy]propionate (III),

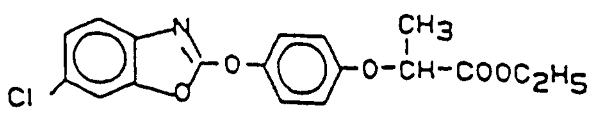

(III)

3,7-dichloroquinoline-8-carboxylic acid (IV) and salts thereof,

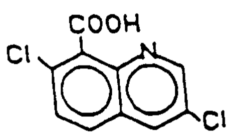

(IV)

N-(ethylthiocarbonyl)azepane (V),

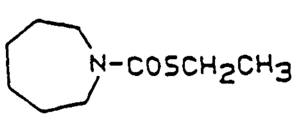

(V)

N-(butoxymethyl)-2-chloro-N-(2,6-diethylphenyl)acetamide (VII),

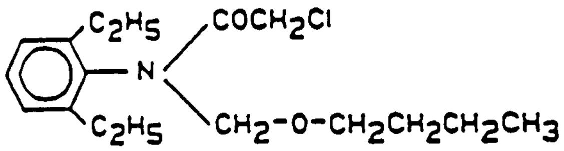

(VII)

N-(2-propoxyethyl)-2-chloro-N-(2,6-diethylphenyl)acetamide (VIII),

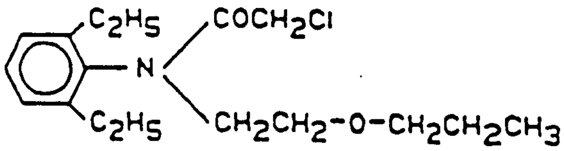

(VIII)

3,5-bis(methylthiocarbonyl)-2-difluoromethyl-4-(2-methylpropyl)-6-trifluoromethylpyridine (IX),

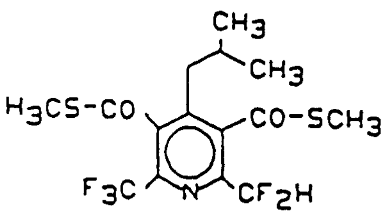

(IX)

2-(1,3-benzothiazol-2-yloxy)-N-methylacetanilide (X),

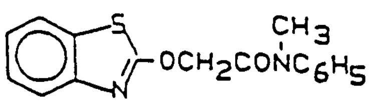

(X)

S-benzyl N-ethyl-(1,2-dimethylpropyl)thiocarbamate (XI),

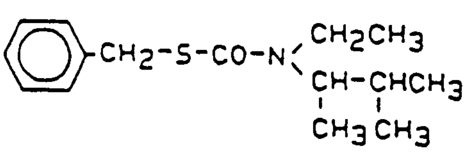

(XI)

N-(2-phenylprop-2-ylthiocarbonyl)piperidine (XII)

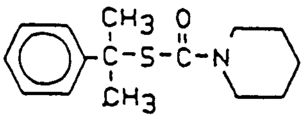

(XII),

HW-52, i.e. 4-ethoxymethoxy-N-(2,3-dichlorophenyl)benzamide (XIII),

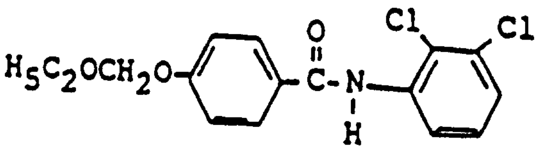

(XIII)

cinmethylin, chemical name
exo-1-methyl-4-(1-methylethyl)-2-(2-methylphenylmethoxy)-7-oxabicyclo-[2.2.1]-heptane (XIV),

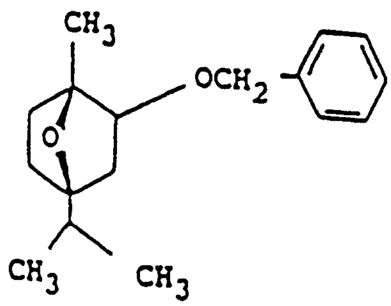

(XIV)

anilofos; S-[2-[(4-chlorophenyl)(1-methylethyl)amino]-2-oxoethyl] O,O-dimethyl phosphorodithioate (XV),

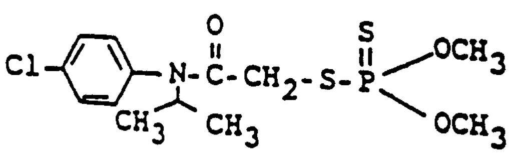

(XV)

benfuresate, 2,3-dihydro-3,3-dimethyl-5-benzofuranylethanesulfonate (XVI),

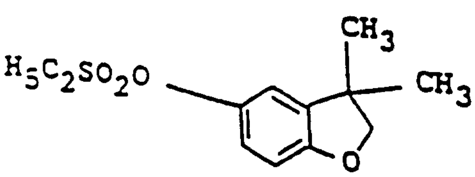

(XVI)

KNW-242, triazofenamide, 1-(3-methylphenyl)-5-phenyl-1H-1,2,4-triazol-3-carboxamide (XVII),

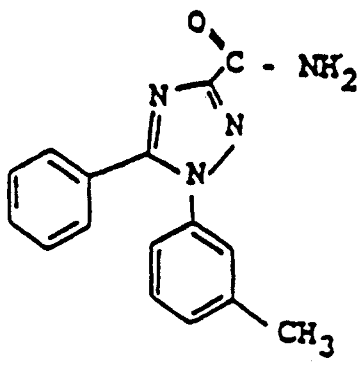

(XVII)

benzofenap, 2-[4-(2,4-dichloro-m-toluoyl)-1,3-dimethylpyrazol-5-yloxy]-4-methylacetophenone (XVIII),

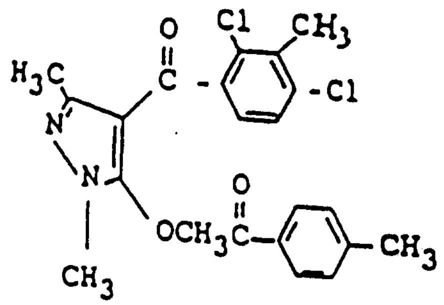

(XVIII)

pyrazoxyfen, 2-[4-(2,4-dichlorobenzoyl)-1,3-dimethylpyrazol-5-yloxy]-acetophenone (XIX)

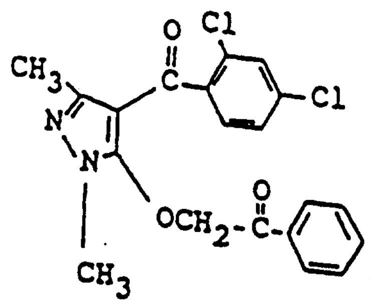

(XIX)

TFH-450, 3-(2,6-diethylphenylsulfonyl)-1-(N-ethyl-N-methylaminocarbonyl)-1,2,4-triazole (XX)

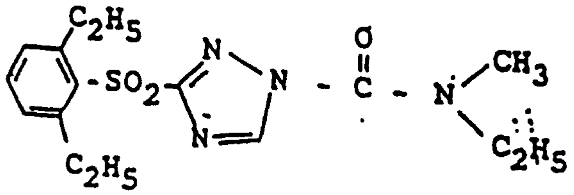

(XX)

5. A composition as claimed in one or more of claim 1 to 4, which contains, besides customary formulation auxiliaries, 0.1 to 99% by weight of the active substances of types A and B.

6. A process for the preparation of an composition as claimed in one or more of claim 1 to 5, which comprises formulating one or more compounds A with the compound B in analogy to a customary formulation of plant protection compositions, from the group comprising wettable powders, water-soluble powders, emulsifiable concentrates, aqueous solutions or concentrates, emulsions, sprayable solutions (tank mix), capsule suspensions, dispersions on an oil or water base, suspoemulsions, suspension concentrates, dusting powders, solutions which can be mixed with oils, seed-dressing compositions, microgranules, spray granules, coated granules, adsorption granules, granules for soil application and for broadcasting, water-dispersible granules, ULV formulations, microcapsules or waxes.

7. A method for controlling undesired plants, which comprises applying an effective amount of an composition as claimed in one or more of claims 1 to 5 to these plants or the areas under cultivation on which they grow.

8. The method as claimed in claim 7, wherein weeds are selectively controlled in crops.

9. The method as claimed in claim 8, wherein the crop is from amongst the group comprising wheat, barley, rye, rice and maize.

**Revendications**

1. Agents herbicides, caractérisés par une teneur à efficacité synérgique en un ou plusieurs composés de formule générale (I) ou leurs sels (composés de type A)

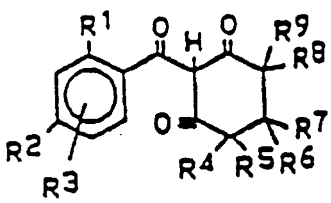

(I)

dans laquelle

| | |
|---|---|
| $R^1$ | représente un atome d'halogène, des groupes alcoxy en $C_1$-$C_4$, alkyle en $C_1$-$C_4$, haloalkyle en $C_1$-$C_4$, $-NO_2$, -CN ou $-S(O)_nR^{10}$ ; |
| $R^2$ et $R^3$, | indépendamment l'un de l'autre, représentent un atome d'hydrogène, un atome d'halogène, des groupes alkyle en $C_1$-$C_4$, alcoxy en $C_1$-$C_4$, haloalcoxy en $C_1$-$C_4$, haloalkyle en $C_1$-$C_4$, -CN, $-NO_2$, $-S(O)_mR^{11}$, $-NR^{12}R^{13}$, $-NR^{14}$-CO-$R^{15}$ ou -CO-$R^{16}$ ; |
| $R^4$, $R^6$, $R^7$, $R^8$, $R^9$, | indépendamment les uns des autres, représentent un atome d'hydrogène ou un groupe alkyle en $C_1$-$C_4$ ; |
| $R^5$ | représente un atome d'hydrogène, des groupes alkyle en $C_1$-$C_4$ ou -CO-O-(alkyle en $C_1$-$C_4$) ; |
| $R^{10}$ | représente des groupes alkyle en $C_1$-$C_4$, haloalkyle en $C_1$-$C_4$ ou alcoxy en $C_1$-$C_4$ ; |
| $R^{11}$ | représente des groupes alkyle en $C_1$-$C_4$, haloalkyle en $C_1$-$C_4$, phényle, benzyle ou $-NR^{17}R^{18}$ ; |

| | |
|---|---|
| $R^{12}$ et $R^{13}$, | indépendamment l'un de l'autre, représentent un atome d'hydrogène ou un groupe alkyle en $C_1$-$C_4$ ; |
| $R^{14}$ | représente un atome d'hydrogène ou un groupe alkyle en $C_1$-$C_4$ ; |
| $R^{15}$ | représente un groupe alkyle en $C_1$-$C_4$ ; |
| $R^{16}$ | représente un atome d'hydrogène, des groupes alkyle en $C_1$-$C_4$, haloalkyle en $C_1$-$C_4$ ou alcoxy en $C_1$-$C_4$ ; |
| $R^{17}$ et $R^{18}$, | indépendamment l'un de l'autre, représentent un atome d'hydrogène ou un groupe alkyle en $C_1$-$C_4$ et |
| n et m, | indépendamment l'un de l'autre, valent 0, 1 ou 2, en combinaison avec le composé VI (composé de type B) suivant |

N,N-diéthylcarbamate de 4-chlorobenzylthio (VI),

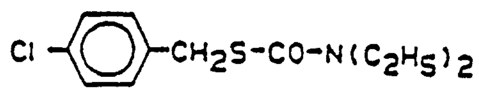
(VI)

les agents herbicides contenant des substances actives du type A et du type B dans un rapport pondéral de 1:0,5 à 1:200.

2. Agent selon la revendication 1, caractérisé en ce qu'il contient des composés de formule I ou leurs sels, dans lequel

| | |
|---|---|
| $R^1$ | représentent des atomes de fluor, de chlore, de brome, d'iode, des groupes méthoxy, nitro, cyano ou $-S(O)_nR^{10}$, |
| $R^2$ et $R^3$, | indépendamment l'un de l'autre, représentent des atomes d'hydrogène, de fluor, de chlore, de brome, d'iode, des groupes méthyle, méthoxy, trifluorométhoxy, cyano, nitro, trifluorométhyle, $-SO_2R^{11}$, $-NR^{12}R^{13}$, $-N(CH_3)-CO-R^{14}$ ou -CO-O-(alkyle en $C_1$-$C_4$) et |
| $R^4$, $R^5$, $R^6$, $R^7$, $R^8$ et $R^9$, | indépendamment les uns des autres, représentent un atome d'hydrogène ou un groupe méthyle, ainsi que |
| $R^{10}$, $R^{11}$, $R^{12}$, $R^{13}$, $R^{14}$ et n, | sont définis comme ci-dessus. |

3. Agent selon la revendication 1 ou 2, caractérisé en ce qu'il contient un ou plusieurs composés de formule I ou leurs sels, dans lequel

| | |
|---|---|
| $R^2$ et $R^3$, | indépendamment l'un de l'autre, représentent des atomes d'hydrogène, de fluor, de chlore, de brome, des groupes $-N(CH_3)_2$, méthoxy, nitro, $-SO_2CH_3$, $-SO_2CH_2Cl$, $-SO_2N(CH_3)_2$ ou trifluorométhyle et |
| n | vaut 2, ainsi que |
| $R^1$, $R^4$, $R^5$, $R^6$, $R^7$, $R^8$ et $R^9$ | sont définis comme ci-dessus. |

4. Agent selon l'une des revendications précédentes, caractérisé par une teneur supplémentaire en un ou plusieurs composés de formule II, III, IV, V, VII, VIII, IX, X, XI, XII, XIII, XIV, XV, XVI, XVII, XVIII, IXX, XX,

D-2-[4-(6-chlorobenzoxazol-2-yloxy)phénoxy]propionate d'éthyle (II),

D,L-2-[4-(6-Chlorobenzoxazol-2-yloxy)phénoxy]-propionate d'éthyle (III)

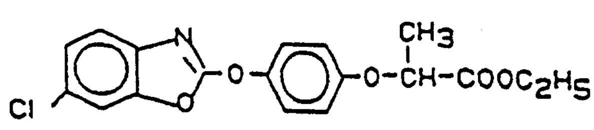
(III)

Acide 3,7-dichloroquinoléine-8-carboxylique (IV) et ses sels,

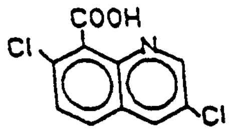

(IV)

N-(Ethylthio-carbonyl)azépane (V)

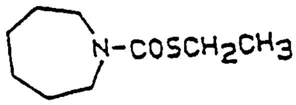

(V)

N-(Butoxyméthyl)-2-chloro-N-(2,6-diéthylphényl)acétamide (VII)

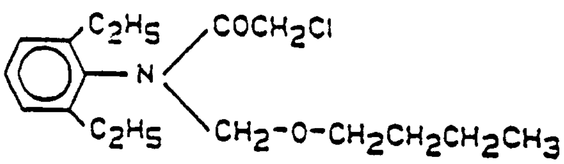

(VII)

N-(2-Propoxyéthyl)-2-chloro-N-(2,6-diéthylphényl)acétamide (VIII)

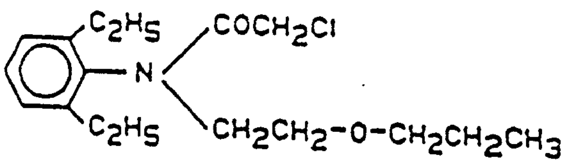

(VIII)

3,5-bis(Méthylthio-carbonyl)-2-difluorométhyl-4-(2-méthylpropyl)-6-trifluorométhyl-pyridine (IX)

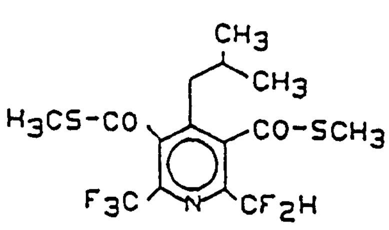

(IX)

2-(1,3-Benzthiazol-2-yloxy)-N-méthylacétanilide (X)

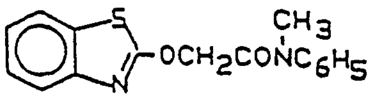

(X)

S-Benzyl-N-éthyl-(1,2-diméthyl-propyl)thiocarbamate (XI),

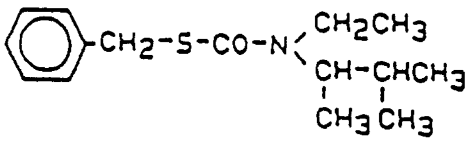

(XI)

et

N-(2-phényl-prop-2-ylthiocarbonyl)pipéridine (XII)

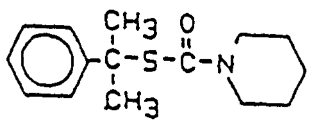

(XII),

HW-52, c'est-à-dire, 4-éthoxyméthoxy-N-(2,3-dichlorophényl)-benzamide (XIII),

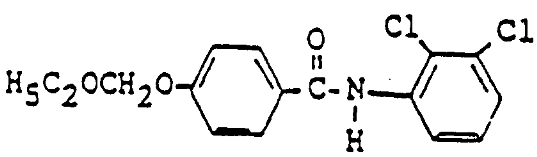

(XIII)

Cinméthyline, désignation chimique
exo-1-méthyl-4-(1-méthyléthyl)-2-(2-méthylphénylméthoxy)-7-oxabicyclo-[2.2.1]-heptane (XIV),

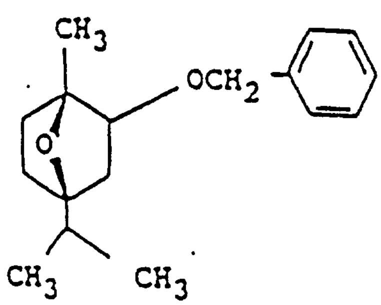

(XIV)

Anilofos ; phosphodithioate de S-[2-[(4-chlorophényl)(1-méthyléthyl)amino]-2-oxoéthyl]0,0-diméthyle (XV)

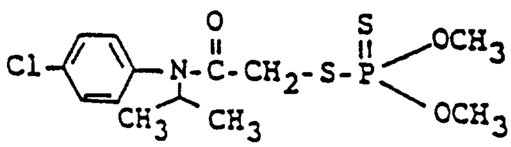

(XV)

Benfuresate ; 5-benzofuranyléthanesulfonate de 2,3-dihydro-3,3-diméthyle (XVI),

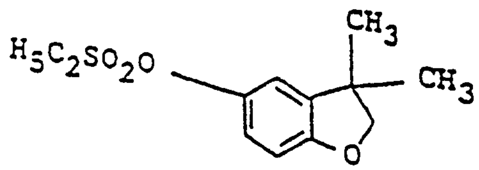

(XVI)

KNW-242, triazofenamide, 1-(3-méthylphényl)-5-phényl-1H-1,2,4-triazole-3-carboxamide (XVII),

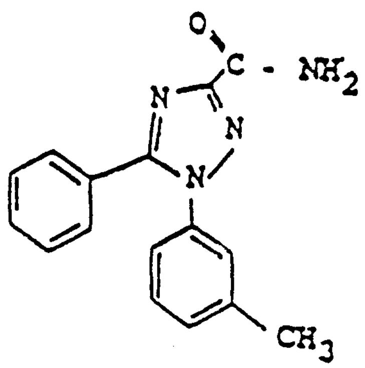

(XVII)

Benzofenap, 2-[4-(2,4-dichloro-m-toluoyl)-1,3-diméthylpyrazol-5-yloxy]-4-méthylacétophénone (XVIII),

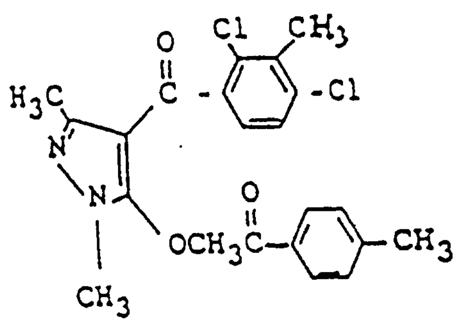

(XVIII)

Pyrazoxyfen, 2-[4-(2,4-dichlorobenzoyl)-1,3-diméthylpyrazol-5-yloxy]-acétophénone (XIX)

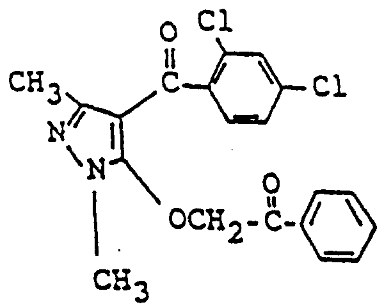

(IX)

TFH-450, 3-(2,6-diéthylphénylsulfonyl)-1-(N-éthyl-N-méthylaminocarbonyl)-1,2,4-triazole (XX)

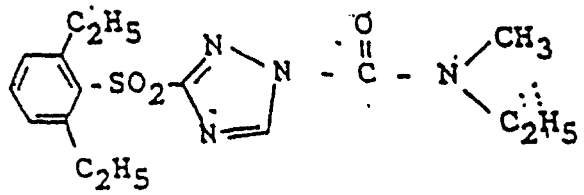

(XX)

5. Agents selon une ou plusieurs des revendications 1 à 4, caractérisés en ce qu'ils contiennent de 0,1 à 99 % en poids de substances actives des types A et B, outre les adjuvants de formulation usuels.

6. Procédé pour la préparation d'un agent selon une ou plusieurs des revendications 1 à 5, caractérisé en ce que l'on formule un ou plusieurs composés A avec le composé B de façon analogue à une formulation de phytoprotection usuelle prise dans le groupe comprenant des poudres pour arrosage, des poudres hydrosolubles, des concentrés émulsionnables, des solutions ou concentrés aqueux, des émulsions, des solutions pulvérisables (tank-mix), des suspensions de capsules, des dispersions à base d'huile ou d'eau, des suspoémulsions, des suspensions concentrées, des poudres pour poudrage, des solution miscibles à l'huile, des appâts, des microgranulés, des granulés pour pulvérisation, des granulés par dépôt et des granulés adsorbants pour l'épandage our applications au sol, des granulés dispersables dans l'eau, des formulation ULV, des microcapsules ou cires.

7. Procédé pour la lutte contre une végétation indésirable, caractérisé en ce que l'on applique à celle-ci ou à la surface cultivée une quantité efficace d'un agent selon une ou plusieurs des revendications 1 à 5.

8. Procédé selon la revendication 7, caractérisé en ce que l'on lutte sélectivement contre les mauvaises herbes dans des cultures de plantes utiles.

9. Procédé selon la revendication 8, caractérisé en ce que la culture de plantes utiles comprend le blé, l'orge, le seigle, le riz et le maïs.